# EUROPEAN PATENT SPECIFICATION

(11) **EP 4 269 827 B1**
(45) Date of publication and mention of the grant of the patent: **15.04.2026**
(21) Application number: 22170243.4
(22) Date of filing: 27.04.2022
(51) Int. Cl.: F16C 19/52, F16C 25/06, F16C 19/36

(54) **BEARING LUBRICATION MONITORING SYSTEM AND MONITORING METHOD**
SYSTEM ZUR LAGERSCHMIERUNGSÜBERWACHUNG UND VERFAHREN ZUR ÜBERWACHUNG
SYSTÈME DE SURVEILLANCE DE LUBRIFICATION DE PALIER ET MÉTHODE DE SURVEILLANCE

(43) Date of publication of application: 01.11.2023
(73) Proprietor: Universiteit Gent, 9000 Gent (BE); Vrije Universiteit Brussel, 1050 Brussel (BE)
(72) Inventor: FAUCONNIER, Dieter, 9052 Zwijnaarde (BE); MANJUNATH, Manjunath, 9052 Zwijnaarde (BE); OST, Wouter, 9052 Zwijnaarde (BE); BERGHMANS, Francis, 1050 Brussels (BE); GEERNAERT, Thomas, 1050 Brussels (BE); GOOSSENS, Sidney, 1050 Brussels (BE); THIENPONT, Hugo, 1050 Brussels (BE); DE BAETS, Patrick, 9052 Zwijnaarde (BE)
(74) Representative: Ipsilon Belgium

(56) References cited:
- DE-A1- 102015 208 444
- JP-A- 2011 226 956
- US-A1- 2015 177 100
- US-A1- 2019 383 300
- US-B1- 6 324 899

## Description

### Field of the Invention

The present invention generally relates to a system and a method for monitoring bearing lubrication.

### Background of the Invention

Bearings, in particular rolling element bearings, are key components in powertrain systems in many different fields, such as for example for automotive, industrial machinery or wind turbine applications. Rising performance demands of modern powertrain systems can push bearings, in particular rolling element bearings, to their limits in terms of power transfer, load capacity and energy efficiency. Bearing performance can largely determine the systems' performance, reliability and durability. Very often, inadequate bearing lubrication is the main cause of the premature failing of bearings, in particular of rolling element bearings. Controlling operational conditions of bearing lubrication can prevent premature bearing failure.

In practice, it has proven to be very difficult to control operational conditions of bearing lubrication, in particular in the so-called thermo-elasto-hydrodynamic lubrication (TEHL) regime. A lubrication film in bearings may be extremely thin: between more or less 50 nm and 1 µm. Moreover, contact pressure may rise up to 4GPa and contact temperature may rise to 200 or 300°C depending on local shear rate. As such, direct measurements of actual contact pressure and actual contact temperature in the lubrication film are extremely challenging.

It is known to use a ball-on-disc tribometer, in which a metal ball rolls over a rigid transparent disc, for measuring film thickness directly through optical interferometry. Contact pressure can then be derived. A disadvantage of this technique is that it cannot be used to perform in-situ measurements of hydrodynamic pressure or temperature in real rolling element bearings under realistic and transient operating conditions nor in steady-state conditions. Other methodologies, such as optical interferometry, IR thermography or Raman spectroscopy, have been used for mapping of film thickness, temperature or pressure, but all techniques only offer single parametric information and need transparent surfaces, so they cannot be applied to real bearings.

It is further known to use ultrasound technology to directly measure film thickness in real bearings. However, ultrasound requires a priori knowledge of the acoustic properties of the lubricant as function of pressure, temperature and shear rate in order to map the reflected sound waves to accurate values of film thickness in EHL contacts as well as the acoustic properties of the bearing surface.

Document US 2019/383300 A1 discloses a vacuum pump comprising a rolling bearing, a lubrication fluid storage section, a MEMS element including an infinitesimal flow rate pump and a first flow path of a capillary structure to move the lubrication fluid of the lubrication fluid storage section to the infinitesimal flow rate pump by capillary force.

It is therefore an aim of the present invention to solve or at least alleviate one or more of the above-mentioned problems. In particular, the invention aims at providing a device, system and method for monitoring bearing lubrication which can provide simultaneous in-situ measurements of temperature and pressure, in bearing lubrication, in particular in an elasto-hydrodynamic lubrication (EHL) regime, using a single monitoring system.

### Summary of the Invention

To this aim, according to an aspect of the invention, there is provided a bearing lubrication monitoring system comprising at least one bearing lubrication monitoring probe device. In particular, the bearing lubrication monitoring probe device includes a sensor configured to measure at least one bearing lubrication parameter, and a sensor holder configured to hold said sensor. In an inventive way, the sensor holder includes a lubrication pressure chamber configured to be in fluid communication with a lubrication film of a bearing, and the sensor extends into said lubrication pressure chamber to measure said at least one bearing lubrication parameter in said lubrication pressure chamber. Due to the fluid communication between a lubrication film in a bearing and the lubrication pressure chamber of the monitoring probe device, at least one bearing lubrication parameter, can be measured relatively accurately in spite of a relatively small film thickness of the lubrication film in the bearing. The probe device can allow the use of a sensor relatively close to a bearing lubrication film with a similar accuracy to a direct measurement without having to introduce the sensor into the lubrication film in the bearing. In this way, the probe device can allow in-situ measurements of one or more bearing lubrication parameters.

The at least one bearing lubrication parameter, which the sensor of the bearing lubrication monitoring probe device is configured to measure, can for example be one of a lubrication contact pressure and a lubrication temperature of said lubrication film in a bearing. Said lubrication parameters can be measured separately or simultaneously by the sensor extending into said lubrication pressure chamber of the monitoring probe device. Said lubrication parameters can help in monitoring performance of the bearing, and in particular of the lubrication conditions of the bearing.

The sensor can preferably include a Fiber-Bragg-Grating (FBG). FBG-based sensors can have a relatively small size and can have a relatively low weight while providing a relatively highly linear response. Since the sensor extends into the lubrication pressure chamber of the probe device, the relatively small size of an FBG-based sensor can be advantageous. Alternatively, other sensor types can be used, such as for example a pressure transducer, a deposited thin-film sensor, a piezoresistive sensor, or any other kind of suitable sensor. Another suitable alternative can be found in a Fabry-Pérot cavity-based sensor involving a mono-mode optical fibre.

The sensor can preferably be configured to measure at least two bearing lubrication parameters, more preferably simultaneously at a single location. The sensor can for example include a micro-structured optical fibre, preferably configured to measure at least two bearing lubrication parameters, preferably simultaneously. A micro-structured optical fiber (MOF), sometimes also referred to as a photonic crystal fiber (PCF), is an optical fiber having a transverse wavelength-scale microstructure typically including air holes running along an entire length of the waveguide. As an example, the sensor may include a birefringent MOF, such as disclosed for example in WO 2011/061309 A1. A central microstructure of the MOF may be adapted for providing a predetermined temperature sensitivity, and a side microstructure may be chosen to provide a predetermined pressure sensitivity, or a sensitivity to any other measurable lubrication parameter. The use of a MOF is particularly advantageous in combination with an FBG-based sensor. Such a MOFBG-based sensor can allow simultaneous measurement of hydrostatic and/or hydrodynamic pressure and temperature in a fluid at a single location. Alternatively, the sensor can include a step-index fibre, configured for example to measure a lubrication temperature, or a micro-structured step-index fibre (MSF) or any other type of suitable optical fibre.

It is preferred that the bearing lubrication monitoring probe device further comprises an adaptor configured to position the sensor in the sensor holder. Such an adaptor can facilitate the mounting of the bearing lubrication monitoring probe device. The sensor can for example first be fixated into the adaptor, for example by gluing with a high strength adhesive to avoid back leaks, or in any other known and suitable way. In a next step, the adaptor can be fixated into the holder, for example by screwing or in any other way known to the person skilled in the art.

The sensor holder may further include an air release element. The air release element can be configured to release air from the pressure chamber or from any other inner portion of the probe device. Air or air bubbles inside the probe device, in particular inside the lubrication pressure chamber or inside of any channel configured to provide the fluid communication between a lubrication film and said pressure chamber, may prevent fluid communication between said lubrication film and said lubrication pressure chamber. The air release element may include an air-tight releasable screw or any known air-tight one-way-valve configured to be releasably connected to the probe device, such that the air release element may be opened to release air from an inside of the probe device.

According to the invention, the bearing lubrication monitoring probe device includes a sensor configured to measure at least one bearing lubrication parameter, and a sensor holder configured to hold said sensor. The sensor holder includes a lubrication pressure chamber configured to be in fluid communication with a lubrication film of a bearing, and the sensor extends into said lubrication pressure chamber to measure said at least one bearing lubrication parameter in said lubrication pressure chamber. The bearing lubrication monitoring system further comprises a bearing including a rotatable portion and a stationary portion, as well as a lubrication film between said rotatable portion and said stationary portion. The bearing can for example be a rolling element bearing, in which case the rotatable portion of the bearing can include a bearing raceway, for example an inner bearing raceway, and a plurality of rolling elements. The stationary portion of the bearing can then include a second bearing raceway, for example an outer bearing raceway. Alternatively, the bearing can be a journal bearing, in which case the rotatable portion of the bearing can include a rotatable shaft in a stationary shell, which shell can then form the stationary portion. Independently of the type of bearing, the stationary portion of the bearing of the system according to the invention, for example the outer bearing raceway or the stationary shell portion, includes a micro-channel configured to provide a fluid communication between said lubrication film and the lubrication pressure chamber of the sensor holder of the bearing lubrication monitoring probe device. A micro-channel is to be understood as a channel having a diameter commonly expressed in micrometre (µm), so in any case smaller than 1 mm. Such a micro-channel can allow measurement of a lubrication parameter of the lubrication film between the rotatable portion and the stationary portion of the bearing while minimizing disruption of a normal functioning of the bearing and of lubrication of the bearing.

A diameter of said micro-channel may be smaller than 100 µm, preferably smaller than 60 µm, more preferably around more or less 50 µm. The diameter of said micro-channel can even go down to more or less 20 µm or smaller. It has been shown that such a diameter can already provide sufficient fluid communication to the monitoring probe device to allow measurement of at least one lubrication parameter in the lubrication pressure chamber of the monitoring probe device. At the same time, the smaller a diameter of the micro-channel, the more accurate and the less disruptive is the measuring of a lubrication parameter of the lubrication film in the lubrication pressure chamber of the probe device on the functioning of the bearing and its lubrication, preventing lubrication fluid to leak away.

The bearing lubrication monitoring system may further comprise a plurality of bearing lubrication monitoring probes. The stationary portion may then include a plurality of micro-channels, of which each micro-channel is configured to provide a fluid communication with the lubrication pressure chamber of the sensor holder of a respective bearing lubrication monitoring probe of said plurality of bearing lubrication monitoring probes. In this way, a lubrication parameter of the lubrication film can be measured simultaneously at different locations in the lubrication film.

When the rotatable portion of the bearing includes a plurality of rolling elements, said rolling elements may advantageously be tapered rolling elements. Tapered rolling elements may also be called substantially conically shaped rolling elements. Tapered rolling elements can provide bearings with relatively high loading capacities, both in radial as in axial loading. Alternatively, substantially spherical rolling elements may be used.

The bearing may preferably be positioned substantially horizontally. In other words, a rotational plane of the bearing, in particular of the rotatable portion of the bearing, may be positioned substantially horizontally. In case of a rolling element bearing including a plurality of rolling elements, the rotational plane of the bearing can be defined as the plane in which the plurality of rolling elements is positioned. In case of a journal bearing, the rotational plane can be defined as the plane which is substantially transverse to the rotatable shaft of the journal bearing. When a rolling element bearing is positioned substantially horizontally, the lubrication film can be distributed substantially equally over the bearing, such that a measurement of a lubrication parameter is substantially independent of the location of measurement on the bearing. A horizontal positioning of the bearing is particularly advantageous in combination with tapered rolling elements. In that way, an axial force exerted on the bearing can be distributed equally over the bearing, in particular over the lubrication film between the rotatable portion and the stationary portion of the bearing. In this way, a lubrication parameter of a bearing can be monitored under varying loading conditions of the bearing.

According to an aspect of the invention, there is provided a method for monitoring at least one lubrication parameter in a bearing, the method having the features of claim 9. In particular, the method includes the steps of providing a bearing including a rotatable portion and a stationary portion and a lubrication film between said rotatable portion and said stationary portion. As described above, the bearing may be a journal bearing, or more preferably a rolling element bearing. The method further comprises the step of providing the stationary portion of the bearing with a micro-channel extending through said stationary portion to the lubrication film between said rotatable portion and said stationary portion of the bearing. The micro-channel may for example extend through an outer bearing raceway of a rolling element bearing. The method further comprises the step of providing at least one bearing lubrication monitoring probe device as previously described. In particular, the bearing lubrication monitoring probe device includes a sensor configured to measure at least one bearing lubrication parameter, and a sensor holder configured to hold said sensor. The sensor holder includes a lubrication pressure chamber configured to be in fluid communication with a lubrication film of a bearing, and the sensor extends into said lubrication pressure chamber to measure said at least one bearing lubrication parameter in said lubrication pressure chamber. The method further comprises the step of bringing the lubrication pressure chamber of the sensor holder into fluid communication with the lubrication film of the bearing via said micro-channel extending through the stationary portion of the bearing. Finally, the method comprises the step of measuring at least one lubrication parameter in said lubrication pressure chamber of the sensor holder of the bearing lubrication monitoring probe device. In this way, a lubrication parameter, such as for example a lubrication contact pressure or a lubrication temperature of said lubrication film, can be measured substantially in-situ relatively accurately in spite of a relatively small film thickness of the lubrication film in the bearing.

At least two lubrication parameters may advantageously be measured simultaneously in said lubrication pressure chamber. Depending on the type of sensor used in the sensor holder of the probe device, one or more lubrication parameters may be measured at a single position in the lubrication film, for example a simultaneous measurement of a lubrication contact pressure and a lubrication temperature of the lubrication film, thus providing more information on the lubrication conditions of the bearing than when only a single parameter can be measured, or more reliable information than when measurements at different locations in the lubrication film are compared, which measurements may be influenced and/or biased by said location of measurement. Additionally, and/or alternatively, the method can also include simultaneous measurement of one or more lubrication parameters at various positions of the lubrication film, for example by providing a plurality of micro-channels through the rotatable portion of the bearing, and by connecting a respective probe device of a plurality of probe devices to a respective micro-channel such that the lubrication pressure chamber of the sensor holder is in fluid communication with the lubrication film of the bearing. In this way, a relatively comprehensive monitoring of the lubrication conditions of the bearing can be provided, taking into account varying conditions over various positions distributed over the lubrication film in the bearing.

The bearing can preferably be positioned substantially horizontally. As previously explained, the horizontal position refers to the rotational plane of the bearing, i.e. the plane in which rolling elements of a rolling element bearing rotate, or the plane which is substantially transverse to the rotatable shaft of a journal bearing. In positioning the bearing substantially horizontally for monitoring at least one lubrication parameter of the bearing, the lubrication film can be distributed substantially equally over the bearing, providing measuring results which are substantially independent of a measuring position over the bearing, in contrast to a vertical positioning of the bearing in which gravity causes a differential distribution of the lubrication film, hence biased monitoring results.

A substantially axial force may preferably be exerted on the bearing, in particular on the rotatable portion of the bearing, for example on the rotatable inner bearing raceway. Exerting a substantially axial force on the bearing may in particular be advantageous when the bearing is positioned substantially horizontally. By exerting an axial force on the bearing, various lubrication conditions can be imitated. The substantially axial force may advantageously be adjustable.

It is preferred that the rotatable portion of the bearing includes a plurality of rolling elements, said rolling elements being tapered rolling elements. Such tapered rolling elements can be in particular advantageous in combination with a method for monitoring at least one lubrication parameter in a bearing including the step of exerting an axial force on the bearing. When the bearing is a rolling element bearing including tapered rolling elements, the shape of the rolling elements can allow substantially equal transmission of said axial force. In this way, dynamically varying lubrication conditions can be imitated and monitored.

There is provided a bearing lubrication monitoring assembly (not claimed). In particular, the bearing lubrication monitoring assembly comprises a bearing including an inner bearing raceway, a plurality of rolling elements, an outer bearing raceway and a lubrication film between said plurality of rolling elements and said outer bearing raceway. The bearing lubrication monitoring assembly further comprises a drive unit configured to drive the bearing, in particular the inner bearing raceway, a loading unit configured to exert a predefined force on the bearing, and a sensing unit configured to monitor at least one lubrication parameter of the lubrication film of the bearing. In an inventive way, the rolling elements are tapered rolling elements, the bearing is positioned substantially horizontally, and the loading unit is configured to exert a substantially vertical axial force on the bearing. Such a bearing lubrication monitoring assembly can in particular be configured to apply the method of monitoring at least one lubrication parameter in a bearing as explained above and provide one or more of the above-mentioned advantages. The assembly can be considered and used as a novel and inventive test rig for bearings, in particular for rolling element bearings, to dynamically monitor lubrication conditions in said bearings.

It is preferred that the sensing unit includes at least one bearing lubrication monitoring probe device as previously described, and that the outer bearing raceway includes at least one micro-channel configured to provide a fluid communication between said lubrication film and the lubrication pressure chamber of the sensor holder of the at least one bearing lubrication monitoring probe device. The at least one probe device as well as the at least one micro-channel extending through the outer bearing raceway of the bearing can provide one or more of the above-mentioned advantages, in particular, in the claimed bearing lubrication monitoring assembly.

### Brief Description of the Drawings

Fig. 1 shows a schematic cross-sectional side view of a preferred embodiment of a bearing lubrication monitoring probe device according to an aspect of the invention;
Fig. 2 shows a schematic cross-sectional side view of a preferred embodiment of a bearing lubrication monitoring system according to an aspect of the invention;
Fig. 3 shows a schematic top view of a further preferred embodiment of a bearing lubrication monitoring system according to an aspect of the invention;
Fig. 4 shows a schematic side view of a preferred embodiment of a bearing lubrication monitoring assembly;
Fig. 5 shows a schematic cross-sectional side view of the bearing unit of the bearing lubrication monitoring assembly 300 of Figure 4;
Fig. 6 shows a side view of a further preferred embodiment of a bearing lubrication monitoring assembly.

### Detailed Description of Embodiment(s)

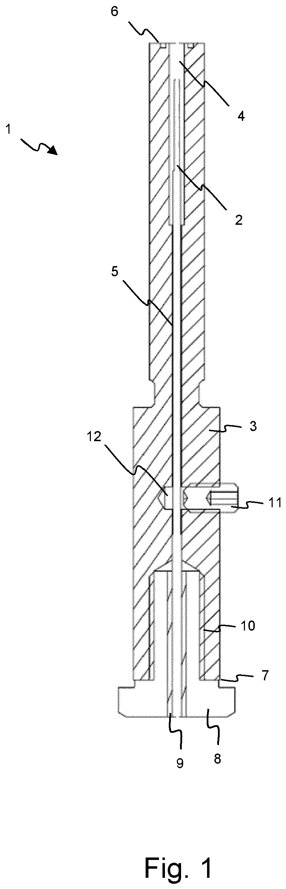

Figure 1 shows a schematic cross-sectional side view of a preferred embodiment of a bearing lubrication monitoring probe device 1 according to an aspect of the invention. The bearing lubrication monitoring probe device 1 includes a sensor 2 configured to measure at least one bearing lubrication parameter and a sensor holder 3 configured to hold said sensor. In an inventive way, the sensor holder 3 includes a lubrication pressure chamber 4 configured to be in fluid communication with a lubrication film of a bearing and the sensor 2 extends into said lubrication pressure chamber 4 to measure said at least one bearing lubrication parameter in said lubrication pressure chamber 4. The sensor holder 3 may for example have a substantially cylindrical shape or a substantially hexagonal shape or a combination of both over portions of the sensor holder 3, or any other suitable shape. The sensor holder 3 can have a first end 6 configured to be in fluid communication with a lubrication film of a bearing, and a second end 7 opposite the first end 6, the second end 7 being configured to receive the sensor 2. The sensor holder 3 may for example have a substantially cylindrical shape towards the first end 6 of the sensor holder 3 and a substantially hexagonal shape towards the second end 7 of the sensor holder 3. In this way, the first end 6 of the sensor holder 3 may be connected to a bearing relatively easily, whereas the second end 7 can provide a relatively good grip to a user for rotation of the sensor holder 3, for example for fixation. The sensor holder 3 may include a bore or a channel 5 through which the sensor can extend into the lubrication pressure chamber 4. Said channel 5 can for example extend in a longitudinal direction of the lubrication probe device 1 between the first end 6 and the second end 7. The bearing lubrication monitoring probe device 1 can further comprise an adaptor 8 configured to position the sensor 2 in the sensor holder 3. The sensor 2 may for example be fixated into the adaptor with a suitable glue 9. The adaptor 8 can be fixated into the sensor holder 3, for example by screwing 10 or in any other way known to the person skilled in the art. The sensor 2 may for example include an optical fiber, and a Fiber Bragg grating. The sensor holder 3 may further include an air release element 11. The air release element 11 may for example include an air-tight releasable screw or any known air-tight one-way-valve configured to be releasably connected to the probe device 1. The air release element 11 may be configured to close off a bore 12 extending through the sensor holder 3 providing a fluid communication with the channel 5 such that, when the air release element 11 is opened, air can be released from an inside of the probe device, in particular from the lubrication pressure chamber 4 or from any other inner portion of the probe device. Air or air bubbles inside the probe device, in particular inside the lubrication pressure chamber 4 or inside of any channel 5, may prevent fluid communication between said lubrication film and said lubrication pressure chamber 4. The bore 12 may for example extend substantially transversely to a longitudinal direction of the probe device 1, or to the channel 5, providing a relatively short air release element 11.

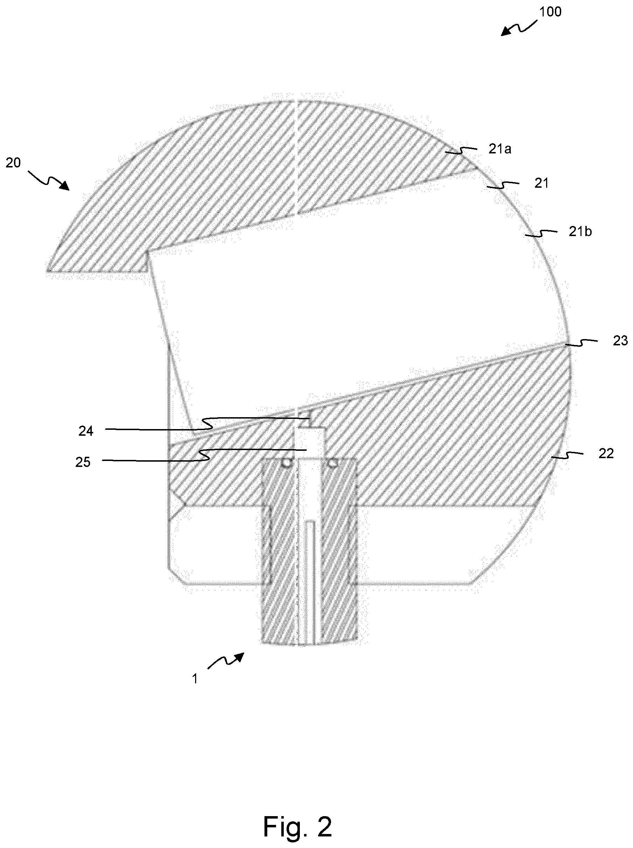

Figure 2 shows a schematic cross-sectional side view of a preferred embodiment of a bearing lubrication monitoring system according to an aspect of the invention. The monitoring system 100 comprises a bearing lubrication monitoring probe device 1, for example a device as described above and shown in Figure 1. The monitoring system 100 further comprises a bearing 20 including a rotatable portion 21 and a stationary portion 22 and a lubrication film 23 between said rotatable portion 21 and said stationary portion 22. The bearing 20 may for example be a rolling element bearing, in which the rotatable portion 21 can include an inner bearing raceway 21a and a plurality of rolling elements 21b, and in which the stationary portion 22 may include an outer bearing raceway 22a. In the monitoring system 100, the stationary portion 22, in particular the outer bearing raceway, includes a micro-channel 24 configured to provide a fluid communication between said lubrication film 23 and the lubrication pressure chamber 4 of the sensor holder 3 of the monitoring probe device 1. A diameter of said micro-channel 24 is for example smaller than 100 µm, preferably smaller than 60 µm, more preferably around more or less 50 µm. The micro-channel 24 can extend at least partly through the stationary portion 22 of the bearing 20. A first end of said micro-channel 24 may be in direct contact with, or may extend directly into, the lubrication film 23. A second end of the micro-channel 24, opposite the first end, may extend into a bearing channel 25 having a larger diameter than the micro-channel 24, the bearing channel 25 being configured to at least partly receive the bearing lubrication monitoring probe device 1, in particular the first end 6 of said monitoring probe device 1 to provide a fluid communication between the lubrication film 23 of the bearing and the lubrication pressure chamber 4 of the monitoring probe device 1. When the bearing 20, in particular the rotating portion 21 of the bearing 20, is rotating, a load is exerted towards the lubrication film 23 and the outer bearing raceway 22 such that a relatively small fraction of the lubrication fluid will be entering the micro-channel to the lubrication chamber 4 of the monitoring probe device 1, where hydrodynamic pressure is built up and is measurable. In said lubrication chamber 4, the sensor 2, which extends into said lubrication chamber 4, is then configured to measure at least one lubrication parameter of the lubrication film 23 of the bearing 20, for example hydrodynamic pressure sensed by the sensor, in particular by the core of an FBG-based sensor. The at least one lubrication parameter can for example be one of a lubrication contact pressure and a lubrication temperature. Depending on the type of sensor, more than one lubrication parameter can be measured simultaneously by a single sensor, for example a lubrication contact pressure and a lubrication temperature.

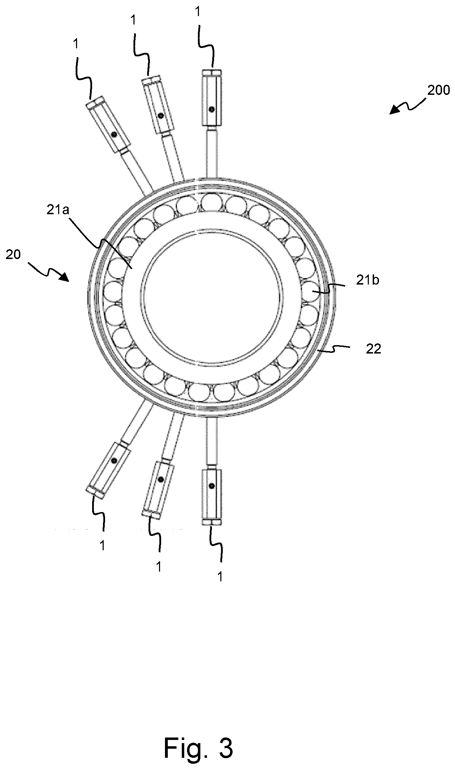

Figure 3 shows a schematic top view of a further preferred embodiment of a bearing lubrication monitoring system 200 according to an aspect of the invention. The system comprises a bearing, in particular a rolling element bearing 20 including a rotatable portion 21, in particular an inner bearing raceway 21a and a plurality of rolling elements 21b, as well as a stationary portion 22, in particular an outer bearing raceway. The monitoring system 200 can comprise a plurality of bearing lubrication monitoring probes 1. The stationary portion 22 of the bearing, in particular the outer bearing raceway can then include a plurality of micro-channels, of which each micro-channel is configured to provide a fluid communication with the lubrication pressure chamber 4 of the sensor holder 3 of a respective bearing lubrication monitoring probe 1 of said plurality of bearing lubrication monitoring probes. Said plurality of bearing lubrication monitoring probes 1 may be distributed over, and radially spaced apart around, an outer circumference of the bearing 20. The lubrication monitoring probes 1, in particular the respective sensors, may for example each be configured to measure a single lubrication parameter in the lubrication pressure chamber. Some of the monitoring probes 1 may for example be configured to measure lubrication temperature, while other monitoring probes 1 may for example be configured to measure lubrication contact pressure. Additionally, and/or alternatively, one or more of the sensors of the respective bearing lubrication monitoring probes 1 may be configured to measure at least two lubrication parameters simultaneously, for example lubrication temperature and lubrication contact pressure. When the bearing 20 is positioned substantially horizontally, measurement results of a lubrication parameter can be independent of a radial position of the respective bearing lubrication monitoring probe 1.

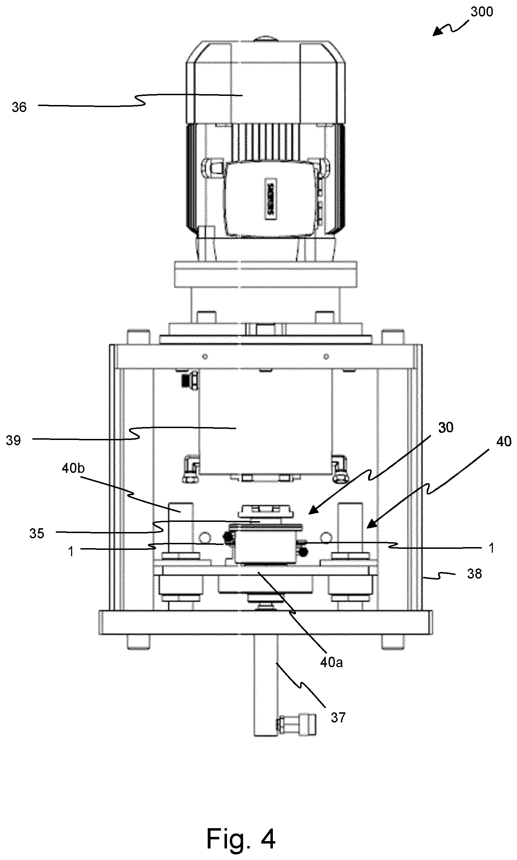

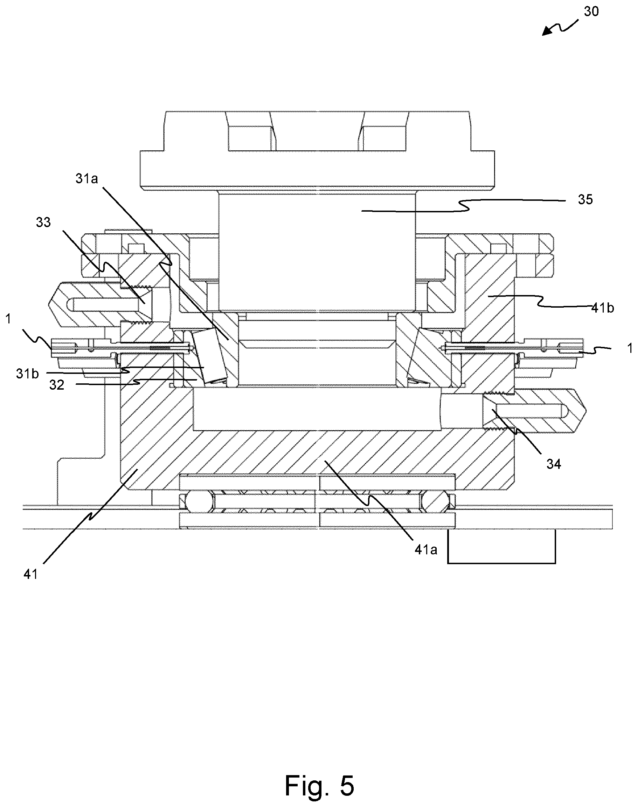

Figure 4 shows a schematic side view of a preferred embodiment of a bearing lubrication monitoring assembly 300. Such a bearing lubrication monitoring assembly 300 can for example be used as a bearing test rig to test a bearing under variable loading conditions, in particular to monitor lubrication conditions of the bearing. The bearing lubrication monitoring assembly 300 comprises a bearing unit 30 including a bearing, for example a bearing to be tested and monitored, in particular a rolling element bearing. The bearing lubrication monitoring assembly 300 may for example be configured to test bearings having an inner diameter in a range of more or less 15 mm to more or less 55 mm, the inner diameter being defined as a diameter of the shaft configured to transfer rotation to the rotatable portion of the bearing, in particular to the inner bearing raceway. The bearing unit 30 may include a sensing unit configured to monitor at least one lubrication parameter of the lubrication film of the bearing. The sensing unit may for example include at least one bearing lubrication monitoring probe device 1, for example as shown and described in Figure 1. The bearing unit 30 is shown and described in more detail in Figure 5. The bearing unit 30 may be positioned on a positioning structure 40. The positioning structure 40 may include an actuatable support plate 40a on which the bearing unit 30 may be mounted, as well as one or more guide elements 40b configured to guide a movement of the support plate 40a along the guide elements 40b. In this way, a bearing to be tested may be mounted and/or demounted into the bearing unit 30 and may then be brought into a test position. The bearing unit 30 and the positioning structure 40 may be included in a protective housing 38. In a novel and inventive way, the bearing unit 30 is positioned such that the bearing is in a substantially horizontal position, i.e. the rotational plane of the bearing is substantially horizontal. A rotatable shaft 35 of the bearing is then positioned substantially vertically. Such a substantially horizontal positioning of the bearing can provide substantially similar lubrication conditions around a circumference of the bearing such that measurements can be independent of a radial measuring position. The bearing lubrication monitoring assembly 300 further comprises a drive unit 36 configured to drive the bearing, in particular the inner bearing raceway. The drive unit 36 may for example be an electromotor, for example an induction motor. The bearing lubrication monitoring assembly 300 may preferably also comprise a support bearing unit 39. The support bearing unit 39 may advantageously be positioned between the bearing unit 30 and the drive unit 36. The support bearing unit 39, for example a spindle unit, may be configured to bear the load caused by a rotation of the bearing driven by the drive unit 36. In this way, the support bearing unit 39 can prevent damage to the drive unit 36. The bearing lubrication monitoring assembly 300 further comprises a loading unit 37 configured to exert a predefined force on the bearing. The loading unit 37 is configured to exert a substantially axial force on the bearing, in particular a substantially vertical load due to the substantially horizontal positioning of the bearing 30. The loading unit 37 may be configured to provide variable loading such that the bearing lubrication may be monitored under dynamic and/or variable loading conditions. The loading unit 37 may also be configured to actuate the positioning structure 40. Alternatively, the positioning structure 40 may be actuated by a different and/or separate actuating unit.

Figure 5 shows a schematic cross-sectional side view of the bearing unit 30 of the bearing lubrication monitoring assembly 300 of Figure 4. The bearing unit 30 can include a support structure 41 for the bearing. The support structure 41 can preferably have a substantially symmetrical shape, for example a substantially cylindrical shape including a base plate 41a and an upstanding side wall 41b. Such a symmetrical shape may be advantageous to withstand high loading forces exerted on the bearing during rotation of the rotatable portion of the bearing. The support structure 41 for the bearing can include an oil inlet 33 as well as an oil outlet 34 configured to provide a lubrication film to the bearing 30. The assembly can further include cooling and/or heating circuits configured to control the lubricant coming in via the oil inlet 33, in particular to control a mass or volumetric flow rate and/or a temperature of the incoming lubricant. When a temperature of the incoming lubricant is known, also viscosity, density and conductivity of said incoming lubricant are known such that substantially identical lubrication conditions can be provided to each of the bearing lubrication measurement locations. The bearing is a rolling element bearing and includes an inner bearing raceway 31a, a plurality of rolling elements 31b, an outer bearing raceway 32 and a lubrication film between said plurality of rolling elements 31b and said outer bearing raceway 22. The rolling elements 31b are tapered rolling elements. The bearing lubrication monitoring assembly 300 further comprises a sensing unit configured to monitor at least one lubrication parameter of the lubrication film of the bearing 30. Said sensing unit may include at least one, and preferably a plurality of, bearing lubrication monitoring probe devices 1, preferably a bearing lubrication monitoring probe device as described above and shown in Figure 1. The outer bearing raceway 32 can thereto include at least one, and preferably a plurality of, micro-channels configured to provide a fluid communication between said lubrication film and the lubrication pressure chamber of the sensor holder of the respective bearing lubrication monitoring probe device 1. The respective bearing lubrication monitoring probe devices 1 may be spaced apart along a circumference of the bearing as shown in Figure 3. The respective sensors of the monitoring probe devices 1 may be configured to measure at least one lubrication parameter, for example lubrication temperature or lubrication contact pressure or any other lubrication parameter. More preferably, the respective sensors may be configured to measure at least two lubrication parameters simultaneously, for example lubrication temperature and lubrication contact pressure. Additionally, and/or alternatively, the sensing unit may include other types of sensors configured to measure further lubrication parameters. Such a substantially vertical bearing lubrication monitoring assembly 300, as shown in Figure 4, including a bearing unit 30 as shown in Figure 5, can provide substantially uniform lubrication conditions over multiple in-situ measurement locations along a circumference of the bearing, whereas monitoring of the bearing lubrication conditions can be performed under controlled axial loading, accelerating/decelerating rolling-sliding motion, well-controlled incoming lubricant conditions and very high stiffness to avoid Noise Vibration Harshness (NVH) as much as possible.

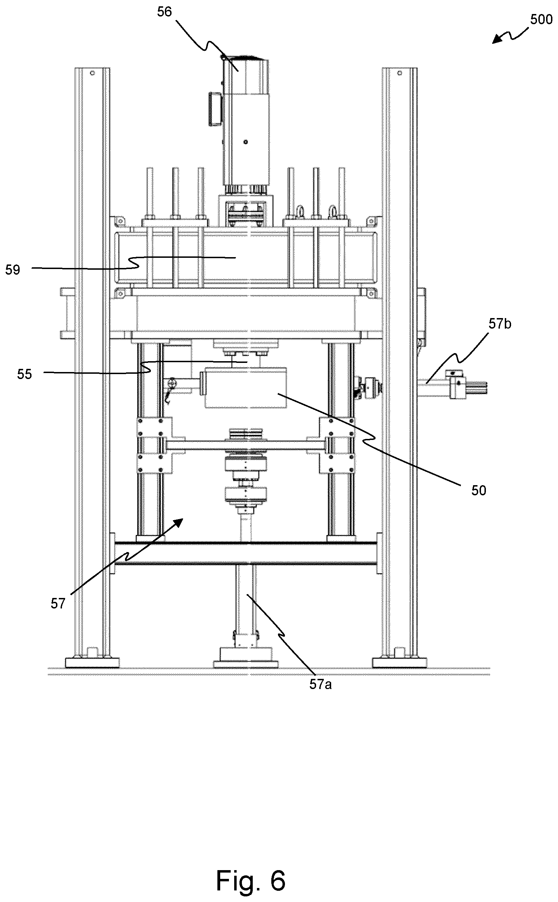

Figure 6 shows a side view of a further preferred embodiment of a bearing lubrication monitoring assembly 500. The bearing lubrication monitoring assembly 500 can for example be used as a bearing test rig for larger scale bearings, for example having an inner diameter in a range of more or less 100 mm to more or less 220 mm, or for example even larger of more or less 400 mm. Such test rigs can also be manufactured for larger or smaller outer bearing diameters. As explained for Figure 4, the bearing lubrication monitoring assembly 500 comprises a bearing unit 50 including a bearing having an inner bearing raceway, a plurality of rolling elements, an outer bearing raceway and a lubrication film between said plurality of rolling elements and said outer bearing raceway. In this embodiment as well, the bearing is positioned substantially horizontally, thus having a substantially vertical rotatable shaft 55. The assembly 500 further comprises a drive unit 56 configured to drive the bearing, in particular the inner bearing raceway. The drive unit 56 can for example be a servo drive unit 56 or any other suitable drive unit. The drive unit 56 may be disconnectable from the bearing unit 50, for example by positioning a support bearing unit 59 between the drive unit 56 and the bearing unit 50 such that the support bearing unit 59 is configured to take up the load exerted by a driven bearing, thus avoiding damage to the drive unit 56. The assembly 500 can further comprise a loading unit 57 configured to exert a predefined force on the bearing 50, in particular an axial, and thus a substantially vertical, force. The loading unit 57 may include an axial load unit 57a configured to exert an axial load on the bearing 50. Additionally, and/or alternatively, the loading unit 57 may include a radial load unit 57b configured to exert a radial load on the bearing. The monitoring assembly 500 further includes a sensing unit (not shown) configured to monitor at least one lubrication parameter of the lubrication film of the bearing, and preferably at least two lubrication parameters simultaneously at a single measurement location, preferably along a radial circumference of the bearing. Such a bearing lubrication monitoring assembly 500 or bearing test rig may allow monitoring of bearing lubrication under controllable dynamic loads, accelerating and decelerating rolling-sliding motions, oscillation cycles and well-controlled incoming lubricant conditions, as explained for Figure 4.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive. The invention is defined by appended claims. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. **Bearing** lubrication monitoring system (100) comprising
- at least one bearing lubrication monitoring probe device (1), said bearing lubrication monitoring probe device (1) including
∘ a sensor (2) configured to measure at least one bearing lubrication parameter;
∘ a sensor holder (3) configured to hold said sensor (2);
wherein the sensor holder (3) includes a lubrication pressure chamber (4) configured to be in fluid communication with a lubrication film (23) of a bearing (20);
- a bearing (20) including a rotatable portion (21) and a stationary portion (22) and a lubrication film (23) between said rotatable portion (21) and said stationary portion (22);
**characterized in that** the sensor (2) extends into said lubrication pressure chamber (4) to measure said at least one bearing lubrication parameter in said lubrication pressure chamber (4); and
the stationary portion (22) includes a micro-channel (24) configured to provide a fluid communication between said lubrication film (23) and the lubrication pressure chamber (4) of the sensor holder (3).

2. Bearing lubrication monitoring system according to claim 1, wherein a diameter of said micro-channel is smaller than 100 µm, preferably smaller than 60 µm, more preferably around more or less 50 µm.

3. Bearing lubrication monitoring system according to any of the preceding claims, comprising a plurality of bearing lubrication monitoring probes, wherein the stationary portion includes a plurality of micro-channels, of which each micro-channel is configured to provide a fluid communication with the lubrication pressure chamber of the sensor holder of a respective bearing lubrication monitoring probe of said plurality of bearing lubrication monitoring probes.

4. **Bearing** lubrication monitoring system according to any of the preceding claims, wherein the rotatable portion includes a plurality of rolling elements, wherein said rolling elements are tapered rolling elements.

5. Bearing lubrication monitoring system according to any of the preceding claims, wherein the bearing is positioned substantially horizontally.

6. Bearing lubrication monitoring system according to any of the preceding claims, wherein the at least one bearing lubrication parameter is one of a lubrication contact pressure and a lubrication temperature.

7. Bearing lubrication monitoring system according to any of the preceding claims, wherein the sensor includes a Fiber-Bragg-Grating.

8. Bearing lubrication monitoring system according to any of the preceding claims, wherein the sensor includes a micro-structured optical fibre.

9. Method for monitoring at least one lubrication parameter in a bearing including the steps of
- providing a bearing including a rotatable portion (21) and a stationary portion (22) and a lubrication film (23) between said rotatable portion (21) and said stationary portion (22);
- providing the stationary portion (22) with a micro-channel (24) extending through the stationary portion (22) to the lubrication film (23);
- providing at least one bearing lubrication monitoring probe device (1), said bearing lubrication monitoring probe device (1) including
∘ a sensor (2) configured to measure at least one bearing lubrication parameter;
∘ a sensor holder (3) configured to hold said sensor (2);
wherein the sensor holder (3) includes a lubrication pressure chamber (4) configured to be in fluid communication with the lubrication film (23) of the bearing (20); wherein the sensor (2) extends into said lubrication pressure chamber (4) to measure said at least one bearing lubrication parameter in said lubrication pressure chamber (4);
- bringing the lubrication pressure chamber (4) of the sensor holder (3) into fluid communication with the lubrication film (23) via said micro-channel (24);
- measuring at least one lubrication parameter in said lubrication pressure chamber (4).

10. Method according to claim 9, wherein at least two lubrication parameters are measured simultaneously in said lubrication pressure chamber.

11. Method according to any of the preceding claims 9 - 10, wherein the bearing is positioned substantially horizontally.

12. Method according to any of the preceding claims 9 - 11, wherein a substantially axial force is exerted on the bearing, wherein the substantially axial force is preferably adjustable.

## Patentansprüche

1. System zur Lagerschmierungsüberwachung (100), umfassend
- zumindest eine Lagerschmierungsüberwachungssondenvorrichtung (1), wobei die Lagerschmierungsüberwachungssondenvorrichtung (1) Folgendes beinhaltet:
∘ einen Sensor (2), der dazu konfiguriert ist, zumindest einen Lagerschmierungsparameter zu messen;
∘ einen Sensorhalter (3), der dazu konfiguriert ist, den Sensor (2) zu halten;
wobei der Sensorhalter (3) eine Schmierungsdruckkammer (4) beinhaltet, die dazu konfiguriert ist, in Fluidkommunikation mit einem Schmierungsfilm (23) eines Lagers (20) zu sein;
- ein Lager (20), das einen drehbaren Abschnitt (21) und einen stationären Abschnitt (22) und einen Schmierungsfilm (23) zwischen dem drehbaren Abschnitt (21) und dem stationären Abschnitt (22) beinhaltet;
**dadurch gekennzeichnet, dass** sich der Sensor (2) in die Schmierungsdruckkammer (4) erstreckt, um den zumindest einen Lagerschmierungsparameter in der Schmierungsdruckkammer (4) zu messen; und
der stationäre Abschnitt (22) einen Mikrokanal (24) beinhaltet, der dazu konfiguriert ist, eine Fluidkommunikation zwischen dem Schmierungsfilm (23) und der Schmierungsdruckkammer (4) des Sensorhalters (3) bereitzustellen.

2. System zur Lagerschmierungsüberwachung nach Anspruch 1, wobei ein Durchmesser des Mikrokanals kleiner als 100 µm, bevorzugt kleiner als 60 µm, bevorzugter um mehr oder weniger 50 µm ist.

3. System zur Lagerschmierungsüberwachung nach einem der vorhergehenden Ansprüche, umfassend eine Vielzahl von Lagerschmierungsüberwachungssonden, wobei der stationäre Abschnitt eine Vielzahl von Mikrokanälen beinhaltet, von denen jeder Mikrokanal dazu konfiguriert ist, eine Fluidkommunikation mit der Schmierungsdruckkammer des Sensorhalters einer jeweiligen Lagerschmierungsüberwachungssonde aus der Vielzahl von Lagerschmierungsüberwachungssonden bereitzustellen.

4. System zur Lagerschmierungsüberwachung nach einem der vorhergehenden Ansprüche, wobei der drehbare Abschnitt eine Vielzahl von Rollelementen beinhaltet, wobei die Rollelemente verjüngte Rollelemente sind.

5. System zur Lagerschmierungsüberwachung nach einem der vorhergehenden Ansprüche, wobei das Lager im Wesentlichen horizontal positioniert ist.

6. System zur Lagerschmierungsüberwachung nach einem der vorhergehenden Ansprüche, wobei der zumindest eine Lagerschmierungsparameter eines von einem Schmierungskontaktdruck und einer Schmierungstemperatur ist.

7. System zur Lagerschmierungsüberwachung nach einem der vorhergehenden Ansprüche, wobei der Sensor ein Faser-Bragg-Gitter beinhaltet.

8. System zur Lagerschmierungsüberwachung nach einem der vorhergehenden Ansprüche, wobei der Sensor eine mikrostrukturierte optische Faser beinhaltet.

9. Verfahren zum Überwachen von zumindest einem Schmierungsparameter in einem Lager, beinhaltend die folgenden Schritte:
- Bereitstellen eines Lagers, das einen drehbaren Abschnitt (21) und einen stationären Abschnitt (22) und einen Schmierungsfilm (23) zwischen dem drehbaren Abschnitt (21) und dem stationären Abschnitt (22) beinhaltet;
- Bereitstellen des stationären Abschnittes (22) mit einem Mikrokanal (24), der sich durch den stationären Abschnitt (22) zu dem Schmierungsfilm (23) erstreckt;
- Bereitstellen von zumindest einer Lagerschmierungsüberwachungssondenvorrichtung (1), wobei die Lagerschmierungsüberwachungssondenvorrichtung (1) Folgendes beinhaltet:
∘ einen Sensor (2), der dazu konfiguriert ist, zumindest einen Lagerschmierungsparameter zu messen;
∘ einen Sensorhalter (3), der dazu konfiguriert ist, den Sensor (2) zu halten;
wobei der Sensorhalter (3) eine Schmierungsdruckkammer (4) beinhaltet, die dazu konfiguriert ist, in Fluidkommunikation mit dem Schmierungsfilm (23) des Lagers (20) zu sein; wobei sich der Sensor (2) in die Schmierungsdruckkammer (4) erstreckt, um den zumindest einen Lagerschmierungsparameter in der Schmierungsdruckkammer (4) zu messen;
- Bringen der Schmierungsdruckkammer (4) des Sensorhalters (3) in Fluidkommunikation mit dem Schmierungsfilm (23) über den Mikrokanal (24);
- Messen von zumindest einem Schmierungsparameter in der Schmierungsdruckkammer (4).

10. Verfahren nach Anspruch 9, wobei zumindest zwei Schmierungsparameter gleichzeitig in der Schmierungsdruckkammer gemessen werden.

11. Verfahren nach einem der vorhergehenden Ansprüche 9-10, wobei das Lager im Wesentlichen horizontal positioniert ist.

12. Verfahren nach einem der vorhergehenden Ansprüche 9-11, wobei eine im Wesentlichen axiale Kraft auf das Lager ausgeübt wird, wobei die im Wesentlichen axiale Kraft bevorzugt einstellbar ist.

## Revendications

1. Système de surveillance de lubrification de palier (100) comprenant
- au moins un dispositif de sonde de surveillance de lubrification de palier (1), ledit dispositif de sonde de surveillance de lubrification de palier (1) comprenant
∘ un capteur (2) conçu pour mesurer au moins un paramètre de lubrification de palier ;
∘ un maintien de capteur (3) conçu pour maintenir ledit capteur (2) ;
dans lequel le maintien de capteur (3) comprend une chambre de pression de lubrification (4) conçue pour être en communication de fluide avec un film de lubrification (23) d'un palier (20) ;
- un palier (20) comprenant une partie rotative (21) et une partie fixe (22) et un film de lubrification (23) entre ladite partie rotative (21) et ladite partie fixe (22) ;
**caractérisé en ce que** le capteur (2) s'étend dans ladite chambre de pression de lubrification (4) pour mesurer ledit au moins un paramètre de lubrification de palier dans ladite chambre de pression de lubrification (4) ; et
la partie fixe (22) comprend un micro-canal (24) conçu pour assurer une communication de fluide entre ledit film de lubrification (23) et la chambre de pression de lubrification (4) du maintien de capteur (3).

2. Système de surveillance de lubrification de palier selon la revendication 1, dans lequel un diamètre dudit micro-canal est inférieur à 100 µm, de préférence inférieur à 60 µm, idéalement de l'ordre de plus ou moins 50 µm.

3. Système de surveillance de lubrification de palier selon l'une quelconque des revendications précédentes, comprenant une pluralité de sondes de surveillance de lubrification de palier, dans lequel la partie fixe comprend une pluralité de micro-canaux, dont chaque micro-canal est conçu pour fournir une communication de fluide avec la chambre de pression de lubrification du maintien de capteur d'une sonde de surveillance de lubrification de palier respective de ladite pluralité de sondes de surveillance de lubrification de palier.

4. Système de surveillance de lubrification de palier selon l'une quelconque des revendications précédentes, dans lequel la partie rotative comprend une pluralité d'éléments roulants, dans lequel lesdits éléments roulants sont des éléments roulants coniques.

5. Système de surveillance de lubrification de palier selon l'une quelconque des revendications précédentes, dans lequel le palier est positionné sensiblement horizontalement.

6. Système de surveillance de lubrification de palier selon l'une quelconque des revendications précédentes, dans lequel l'au moins un paramètre de lubrification de palier est l'une d'une pression de contact de lubrification et d'une température de lubrification.

7. Système de surveillance de lubrification de palier selon l'une quelconque des revendications précédentes, dans lequel le capteur comprend une fibre à réseau de Bragg.

8. Système de surveillance de lubrification de palier selon l'une quelconque des revendications précédentes, dans lequel le capteur comprend une fibre optique microstructurée.

9. Procédé permettant la surveillance d'au moins un paramètre de lubrification dans un palier comprenant les étapes de
- fourniture d'un palier comprenant une partie rotative (21) et une partie fixe (22) et un film de lubrification (23) entre ladite partie rotative (21) et ladite partie fixe (22) ;
- équipement, de la partie fixe (22), d'un micro-canal (24) s'étendant à travers la partie fixe (22) jusqu'au film de lubrification (23) ;
- fourniture d'au moins un dispositif de sonde de surveillance de lubrification de palier (1), ledit dispositif de sonde de surveillance de lubrification de palier (1) comprenant
∘ un capteur (2) conçu pour mesurer au moins un paramètre de lubrification de palier ;
∘ un maintien de capteur (3) conçu pour maintenir ledit capteur (2) ;
dans lequel le maintien de capteur (3) comprend une chambre de pression de lubrification (4) conçue pour être en communication de fluide avec le film de lubrification (23) du palier (20) ; dans lequel le capteur (2) s'étend dans ladite chambre de pression de lubrification (4) pour mesurer ledit au moins un paramètre de lubrification de palier dans ladite chambre de pression de lubrification (4) ;
- fait d'amener la chambre de pression de lubrification (4) du maintien de capteur (3) en communication de fluide avec le film de lubrification (23) par l'intermédiaire dudit micro-canal (24) ;
- mesure d'au moins un paramètre de lubrification dans ladite chambre de pression de lubrification (4).

10. Procédé selon la revendication 9, dans lequel au moins deux paramètres de lubrification sont mesurés simultanément dans ladite chambre de pression de lubrification.

11. Procédé selon l'une quelconque des revendications précédentes 9 ou 10, dans lequel le palier est positionné sensiblement horizontalement.

12. Procédé selon l'une quelconque des revendications précédentes 9 à 11, dans lequel une force sensiblement axiale est exercée sur le palier, dans lequel la force sensiblement axiale est de préférence réglable.
